(19) Europäisches Patentamt
European Patent Office
Office européen des brevets

(11) **EP 3 104 655 B1**

(12) **EUROPEAN PATENT SPECIFICATION**

(45) Date of publication and mention
of the grant of the patent:
**01.05.2019 Bulletin 2019/18**

(21) Application number: **14891640.6**

(22) Date of filing: **12.05.2014**

(51) Int Cl.:
***H04W 72/12*** *(2009.01)*

(86) International application number:
**PCT/CN2014/077208**

(87) International publication number:
**WO 2015/172275 (19.11.2015 Gazette 2015/46)**

(54) **DOWNLINK SIGNAL TRANSMISSION METHOD, BASE STATION AND USER EQUIPMENT**

DOWNLINK-SIGNALÜBERTRAGUNGSVERFAHREN, BASISSTATION UND BENUTZERGERÄT

PROCÉDÉ, STATION DE BASE ET ÉQUIPEMENT UTILISATEUR DESTINÉS À LA TRANSMISSION D'UN SIGNAL DESCENDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2016 Bulletin 2016/50**

(73) Proprietor: **Huawei Technologies Co., Ltd.**
**Longgang District**
**Shenzhen, Guangdong 518129 (CN)**

(72) Inventors:
• **ZHOU, Xun**
**Shenzhen**
**Guangdong 518129 (CN)**

• **WANG, Zhao**
**Shenzhen**
**Guangdong 518129 (CN)**

(74) Representative: **Epping - Hermann - Fischer Patentanwaltsgesellschaft mbH**
**Schloßschmidstraße 5**
**80639 München (DE)**

(56) References cited:
**EP-A1- 2 574 097         CN-A- 101 646 198**
**CN-A- 102 098 792         CN-A- 102 685 753**
**US-A1- 2011 077 015         US-A1- 2012 252 470**
**US-A1- 2013 273 928         US-A1- 2013 308 595**

Description

TECHNICAL FIELD

Embodiments of the present invention relate to the field of wireless communications, and more specifically, to a downlink signal transmission method, a base station, and user equipment.

BACKGROUND

With development of a radio access technology, an existing 3rd generation (3rd Generation, 3G) mobile communications system cannot meet requirements of a new service. As a next-generation mobile communications system, a Long Term Evolution (Long Term Evolution, LTE) system improves band efficiency and a communication rate of the system by using a series of new technologies in an existing 3G band. LTE supports flexible band configuration, has a maximum system bandwidth of 20 MHz, and can support a downlink transmission rate of up to 150 Mbps, thereby meeting ever-increasing service requirements.

Because frequency resources are limited, with shrinking of 2nd generation (2nd Generation, 2G) Global System for Mobile Communications (Global System for Mobile Communications, GSM) services, generally, an operator may deploy, in a band in which a GSM used to be deployed, an LTE network by statically performing frequency refarming on a part of bandwidth, and the GSM and LTE each independently occupy a part of the band. Because GSM traffic will gradually migrate toward high-standard LTE, a part of a band of the GSM is dynamically shared with LTE in the prior art. Therefore, LTE may perform allocation by using a corresponding dedicated frequency resource and a corresponding shared frequency resource as a whole.

US 2011/0077015 A1 relates to methods, computer program products and apparatuses providing shared spectrum allocation. In one exemplary embodiment, a method includes: estimating network load for at least one region of a network using a load measurement method; using a decision criteria and the estimated network load, determining whether a bandwidth frequency allocation of a dedicated shared bandwidth for the at least one region should be modified, wherein the dedicated shared bandwidth includes bandwidth used by a plurality of systems of the network; and in response to determining that the bandwidth frequency allocation

should be modified, modifying the bandwidth frequency allocation of the at least one region. In another exemplary embodiment, a method includes: providing a dedicated bandwidth to be allocated among a plurality of systems of a network including a first system and a second system; and allocating the dedicated bandwidth such that it includes a first allocation for the first system, a second allocation for the second system and a shared portion.

US 2013/0273928 A1 discloses methods and apparatus relating to cellular communications and in particular to a frequency spectrum shared by two cellular networks. An object of D2 is the flexible utilization of the spectrum. This is achieved by a method where a first of the networks occupies part of the shared spectrum in relation to the traffic load in the first network. The first network informs a second of the networks on the extent the shared spectrum is occupied, for the second network to be free to use the shared spectrum outside the occupied part. A radio resource management unit, a base station controller, and a radio base station are also disclosed. An advantage is that spectrum can be lent from an old system when a new system is introduced.

However, because a shared band is interfered by a GSM communication signal, channel quality in the shared band is much poorer than channel quality in a dedicated band that is subjected to only interference within an LTE network. Therefore, a final transmission rate of a signal in the band can only reach a level in the shared band with poor channel quality.

US 2013/0308595 A1 relates to a new method, apparatus and software related product (e.g., a computer readable memory) for using (or reusing) unused frequency resources/channels in a legacy radio access technology system (a first radio access technology system) such as GSM as additional/reused resources for a future/advanced radio access technology systems (a second radio access technology system) such as LTE wireless system. In one embodiment, the extension carrier may be used to simultaneously deploy/assign, e.g., LTE transmission in the same frequency band as the legacy radio access technology system such as GSM with LTE transmission occupying empty GSM time plus frequency slots. In a further embodiment, LTE system over-provisioning may be used so that individual GSM channel(s) can be deactivated and used by the LTE system.

EP 2 574 097 A1 discloses a handover method based on a cognitive technology. At least two working areas such as a Primary Working Area (PWA) and a Secondary Working Area (SWA), a RRM and a HOC are configured both in User Equipment (UE) and in a Base Station (BS); after receiving a handover request, according to the current radio environments, the PWA of the BS makes a handover negotiation with the neighboring BSs or with the neighboring BSs and the UE requesting handover, determines the communication parameters satisfying the handover request, and sends the determined communication parameters to the SWA of the BS and the SWA of the UE; the SWA of the BS and the SWA of the UE configure said communication parameters and notify the RRM of the BS after the configuration is finished;

the RRM of the BS instructs the HOC of the BS and the HOC of the UE to activate the respective SWAs, and to perform the handover according to the communication parameters configured by the SWA.

## SUMMARY

Embodiments of the present invention provide a downlink signal transmission method and a base station in accordance with the independent claims, so as to improve a downlink signal transmission rate in a band.

According to the embodiments of the present invention, in a transmission band including a shared band and a dedicated band, a frequency resource in the dedicated band of LTE with higher channel quality is preferentially allocated, and therefore, a downlink signal transmission rate in the transmission band is improved.

## BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic structural diagram of a downlink signal transmission system according to an embodiment of the present invention;

FIG. 2 is a schematic flowchart of a downlink signal transmission method according to an embodiment of the present invention;

FIG. 3 is a schematic flowchart of a downlink signal transmission method according to another embodiment of the present invention;

FIG. 4 is a schematic flowchart of a downlink signal transmission method according to an embodiment of the present invention;

FIG. 5 is a schematic flowchart of a downlink signal transmission method according to an embodiment of the present invention;

FIG. 6 is a schematic structural diagram of a downlink signal transmission base station according to an embodiment of the present invention;

FIG. 7 is a schematic structural diagram of downlink signal transmission user equipment according to an embodiment of the present invention; FIG. 8 is a schematic structural diagram of downlink signal transmission user equipment according to an embodiment of the present invention;

FIG. 9 is a schematic structural diagram of a downlink signal transmission base station according to an embodiment of the present invention;

FIG. 10 is a schematic structural diagram of downlink signal transmission user equipment according to an embodiment of the present invention; and

FIG. 11 is a schematic structural diagram of downlink signal transmission user equipment according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

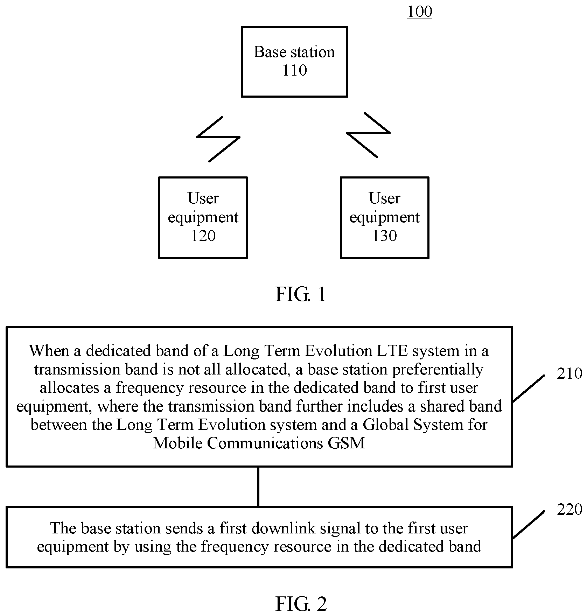

FIG. 1 is a schematic structural diagram of a downlink signal transmission system according to an embodiment of the present invention. The system 100 in FIG. 1 is a communications system shared by a Global System for Mobile Communications (Global System for Mobile communication, GSM) and a Long Term Evolution (Long Term Evolution, LTE) system, and includes a base station 110, user equipment 120, and user equipment 130. It should be understood that the base station 110, the user equipment 120, and the user equipment 130 may communicate by using the Global System for Mobile Communications and the Long Term Evolution system.

It should be further understood that in this embodiment of the present invention, the user equipment (User Equipment, UE) includes but is not limited to a mobile station (Mobile Station, MS), a mobile terminal (Mobile Terminal), a mobile telephone (Mobile Telephone), a handset (handset), portable equipment (portable equipment), or the like. The user equipment may communicate with one or more core networks by using a radio access network (Radio Access Network, RAN). For example, the user equipment may be a mobile telephone (or referred to as a "cellular" telephone), a computer with a wireless communication function, or the like. The user equipment may also be a portable, pocket-sized, handheld, computer built-in, or in-vehicle mobile apparatus.

FIG. 2 is a schematic flowchart of a downlink signal transmission method according to an embodiment of the present invention. The method in FIG. 2 is executed by a base station. The method includes the following content.

210. When a dedicated band of a Long Term Evolution system in a transmission band is not all allocated, the base station preferentially allocates a frequency resource in the dedicated band to first user equipment, where the transmission band further includes a shared band between the Long Term Evolution system and a Global System for Mobile Communications (GSM).

220. The base station sends a first downlink signal to the first user equipment by using the frequency resource in the dedicated band.

In other words, in a scenario in which the GSM and the LTE system share a band, the transmission band of the base station may include a dedicated band of the LTE system and the shared band between the LTE system and the GSM. When the dedicated band is unsaturated, the base station may preferentially allocate the frequency resource in the dedicated band to user equipment which is to be scheduled. When the dedicated band is saturated, the base station allocates a frequency resource in the shared band to the user equipment which is to be scheduled.

It should be understood that the frequency resource in the dedicated band is preferentially allocated to the first user equipment may be: a frequency resource that is in the dedicated band and is within a predetermined transmission time interval (Transmission Time Interval, TTI) is preferentially allocated to the first user equipment, for example, a frequency resource that is in the dedicated band and is within one or more transmission time intervals. However, this embodiment of the present invention is not limited thereto, that is, the frequency resource in the dedicated band may be preferentially allocated to the first user equipment in any manner. It should be further understood that the first user equipment may be user equipment in any form illustrated in FIG. 1.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

According to this embodiment of the present invention, in 210, the base station may preferentially allocate the frequency resource that is in the dedicated band and is within the predetermined transmission time interval (TTI) to the first user equipment.

Because the base station preferentially allocates the frequency resource that is in the dedicated band and is within the predetermined transmission time interval to the first user equipment, the frequency resource may be flexibly allocated and scheduled according to requirements.

Optionally, in another embodiment, the method in FIG. 2 further includes: when the frequency resource in the dedicated band within the predetermined transmission time interval is all allocated, allocating, by the base station, a frequency resource that is in the shared band and is within the predetermined transmission time interval to second user equipment; and sending, by the base station, a second downlink signal to the second user equipment by using the frequency resource that is in the shared band and is within the predetermined transmission time interval.

In other words, when the dedicated band is saturated, the base station may allocate the frequency resource that is in the shared band and is within the predetermined transmission time interval to user equipment to which the dedicated band is not allocated, so as to avoid allocating a frequency resource in the dedicated band and a frequency resource in the shared band that are within a same transmission time interval to same user equipment.

It should be understood that the second user equipment may be user equipment in any form illustrated in FIG. 1. The first user equipment and the second user equipment are different user equipments, but may be user equipment of a same type, for example, both are mobile handheld devices. Because a frequency resource in a shared band is allocated to user equipment, and more data can be transmitted, a dedicated band is fully utilized, and band utilization is further improved.

Optionally, in another embodiment, the method in FIG. 2 further includes: determining, by the base station, a priority of the first user equipment, where the priority of the first user equipment indicates a sequence in which the base station allocates a frequency resource to the first user equipment, and the preferentially allocating a frequency resource in the dedicated band to first user equipment includes: allocating the frequency resource in the dedicated band to the first user equipment according to the priority of the first user equipment.

In other words, the base station may allocate the frequency resource in the dedicated band to user equipment with a higher priority according to a descending order of priorities of user equipments. After the dedicated band is all allocated, the shared band is allocated to remaining user equipment. It should be understood that the base station may determine a priority of user equipment according to a user need, determine a priority of user equipment according to a transmission rate of the user equipment in the transmission band, for example, transmission rate information reported by the user equipment, or determine a priority of user equipment based on another parameter or indicator, which is not limited in this embodiment of the present invention. Because a resource is allocated according to a priority of user equipment, different priorities may be used for different users, and allocation flexibility is improved. In addition, because a frequency resource is preferentially allocated to user equipment with a higher priority, frequency efficiency can be improved.

According to this embodiment of the present invention, the determining, by the base station, a priority of the first user equipment includes: determining, by the base station, the priority of the first user equipment according to a transmission rate and band efficiency that are of the first user equipment in the dedicated band.

It should be understood that the foregoing transmission rate may be a historical transmission rate of the user equipment, that is, a sum of transmission rate values before a moment at which the frequency resource is allocated to the user equipment. The base station may obtain a transmission rate value by means of reporting by the user equipment. The band efficiency is spectral efficiency. The user equipment may report band efficiency information to the base station. It should be further understood that the priority may be a function of time. For example, when a transmission rate and frequency efficiency are for an $N^{th}$ transmission time interval (N is an integer), the priority of the user equipment is a function of time. Alternatively, the priority may be independent of time. Because a priority of user equipment is determined according to a transmission rate and band efficiency, frequency resource allocation flexibility is improved, and spectrum utilization and frequency efficiency are further improved.

According to this embodiment of the present invention, the determining, by the base station, the priority of the first user equipment according to a transmission rate and band efficiency that are of the first user equipment in the dedicated band includes: determining, by the base station, the priority of the first user equipment according to a transmission rate and band efficiency that are of the first user equipment, in the dedicated band, and within the predetermined transmission time interval.

It should be understood that the predetermined transmission time interval in the specification may be one transmission time interval or multiple transmission time intervals. Because priorities are for different transmission time intervals, and a base station may allocate resources to user equipments of different priorities within different transmission time intervals, allocation and scheduling flexibility are further improved.

Optionally, in another embodiment, the method in FIG. 2 further includes: receiving, by the base station, a first channel quality indicator (Channel Quality indicator, CQI) sent by the first user equipment; and determining, by the base station by adjusting the first channel quality indicator, a first modulation and coding scheme (Modulation and Coding Scheme, MCS) that is for the first user equipment, of the first downlink signal, and in the dedicated band; and the sending, by the base station, a first downlink signal to the first user equipment by using the frequency resource in the dedicated band includes: sending, by the base station, the first downlink signal to the first user equipment according to the first modulation and coding scheme by using the frequency resource in the dedicated band.

Because a base station performs modulation and coding for different user equipments according to a received CQI, a channel with high transmission quality may have a higher transmission rate, and spectral efficiency is further improved.

Optionally, in another embodiment, the method in FIG. 2 further includes: receiving, by the base station, a second channel quality indicator sent by the second user equipment; and determining, by the base station by adjusting the second channel quality indicator, a second modulation and coding scheme that is for the second user equipment, of a second downlink signal, and in the shared band; and the sending, by the base station, a second downlink signal to the second user equipment by using the frequency resource that is in the shared band and is within the predetermined transmission time interval includes: sending, by the base station, the second downlink signal to the second user equipment according to the second modulation and coding scheme by using the frequency resource that is within the predetermined transmission time interval.

An adaptive modulation and coding scheme is used in a dedicated band, and an adaptive modulation and coding scheme is also used in a shared band, that is, the modulation and coding scheme in the dedicated band and the modulation and coding scheme in the shared band can be independently determined. Therefore, spectral efficiency in the dedicated band is prevented from being lowered by the shared band, and spectral efficiency in the shared band is further improved.

According to this embodiment of the present invention, the receiving, by the base station, a first channel quality indicator sent by the first user equipment includes: receiving, by the base station, the first channel quality indicator periodically sent by the first user equipment. The determining, by the base station, a first modulation and coding scheme that is for the first user equipment and is in the dedicated band by adjusting the first channel quality indicator includes: determining, by the base station, an adjustment value of the first channel quality indicator according to a measurement value of an initial transmission block error rate of the first user equipment in the dedicated band and a specified target value of the initial transmission block error rate; and determining, by the base station according to the adjustment value of the first channel quality indicator, the first modulation and coding scheme that is for the first user equipment and is in the dedicated band.

It should be understood that the base station receives the first channel quality indicator periodically sent by the first user equipment. The first channel quality indicator may be sent at a predetermined transmission time interval, for example, the first channel quality indicator is sent at a transmission time interval. Alternatively, the first channel quality indicator may be sent according to a predetermined period. Optionally, an adjustment step may also be set when the adjustment value is being determined. Because a channel quality indicator periodically sent by user equipment is received, a modulation and coding scheme can be timely updated according to channel quality information fed back by the user equipment, which not only ensures transmission quality but also improves the frequency efficiency. Because a measurement value of an initial transmission block error rate is a measurement value for a dedicated band, a channel quality indicator may be adjusted more effectively, and modulation and coding are performed more effectively, which further improves frequency efficiency.

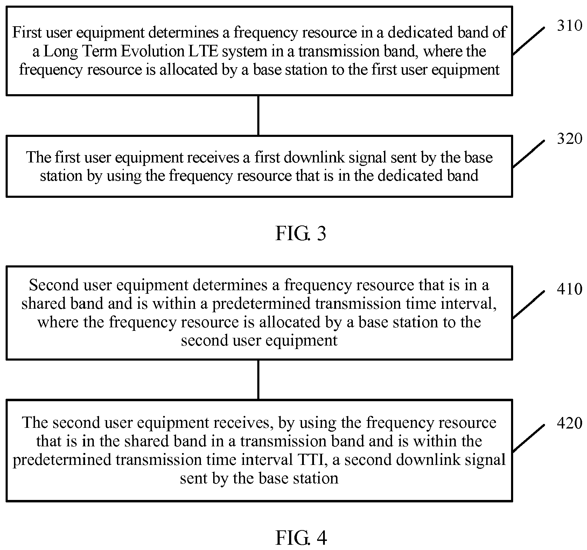

FIG. 3 is a schematic flowchart of a downlink signal transmission method according to another embodiment of the present invention. The method in FIG. 3 is executed by user equipment, is corresponding to the method in FIG. 2, and includes the following content.

310. First user equipment determines a frequency resource in a dedicated band of a Long Term Evolution system in a transmission band, where the frequency resource is allocated by a base station to the first user equipment.

320. The first user equipment receives a first downlink signal sent by the base station by using the frequency resource in the dedicated band, where the frequency resource in the dedicated band is preferentially allocated by the base station when the dedicated band is not all allocated, and the transmission band further includes a shared band between the Long Term Evolution system and a Global System for Mobile Communications.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

According to this embodiment of the present invention, the frequency resource in the dedicated band is a frequency resource within a predetermined transmission time interval.

According to this embodiment of the present invention, the frequency resource in the dedicated band is preferentially allocated by the base station according to a priority of the first user equipment in the case in which the dedicated band is not all allocated, the priority of the first user equipment is determined by the base station, and the priority of the first user equipment indicates a sequence in which the base station allocates a frequency resource to the first user equipment.

According to this embodiment of the present invention, the priority of the first user equipment is determined by the base station according to a transmission rate and band efficiency that are of the first user equipment in the dedicated band.

According to this embodiment of the present invention, the priority of the first user equipment is determined by the base station according to a transmission rate and band efficiency that are of the first user equipment, in the dedicated band, and within the predetermined transmission time interval.

Optionally, in another embodiment, the method in FIG. 3 further includes: sending, by the first user equipment, a first channel quality indicator to the base station; and the receiving, by the first user equipment, a first downlink signal sent by the base station by using the frequency resource in the dedicated band of the Long Term Evolution system in the transmission band includes: receiving, by the first user equipment, the first downlink signal sent by the base station according to a first modulation and coding scheme of the first downlink signal in the dedicated band by using the frequency resource in the dedicated band of the Long Term Evolution system in the transmission band, where the first modulation and coding scheme is determined by the base station by adjusting the first channel quality indicator.

According to this embodiment of the present invention, the sending, by the first user equipment, a first channel quality indicator to the base station includes: periodically sending, by the first user equipment, the first channel quality indicator to the base station, where the first modulation and coding scheme is determined by the base station according to an adjustment value of the first channel quality indicator, and the adjustment value of the first channel quality indicator is determined by the base station according to a measurement value of an initial transmission block error rate in the dedicated band and a specified target value of the initial transmission block error rate.

FIG. 4 is a schematic flowchart of a downlink signal transmission method according to an embodiment of the present invention. The method in FIG. 4 is executed by user equipment, and includes: 410. Second user equipment determines a frequency resource that is in a shared band and is within a predetermined transmission time interval, where the frequency resource is allocated by a base station to the second user equipment. 420. The second user equipment receives, by using the frequency resource that is in the shared band in a transmission band and is within the predetermined transmission time interval, a second downlink signal sent by the base station, where the transmission band includes the shared band and a dedicated band of a Long Term Evolution system, the shared band is shared by the Long Term Evolution system and a Global System for Mobile Communications, and the frequency resource in the shared band is allocated by the base station to the second user equipment when a frequency resource in the dedicated band within the predetermined transmission time interval is all allocated.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

Optionally, in another embodiment, the method in FIG. 4 further includes: sending, by the second user equipment, a second channel quality indicator to the base station; and the receiving the second user equipment, by using the frequency resource that is in the shared band in a transmission band and is within the predetermined transmission time interval, a second downlink signal sent by the base station includes: receiving, by the second user equipment, the second downlink signal sent by the base station to the second user equipment according to a second modulation and coding scheme of the second downlink signal by using the frequency resource that is in the shared band and is within the predetermined time interval, where the second modulation and coding scheme is determined by the base station by adjusting the second channel quality indicator.

The following describes the embodiments of the present invention in further detail with reference to a specific example.

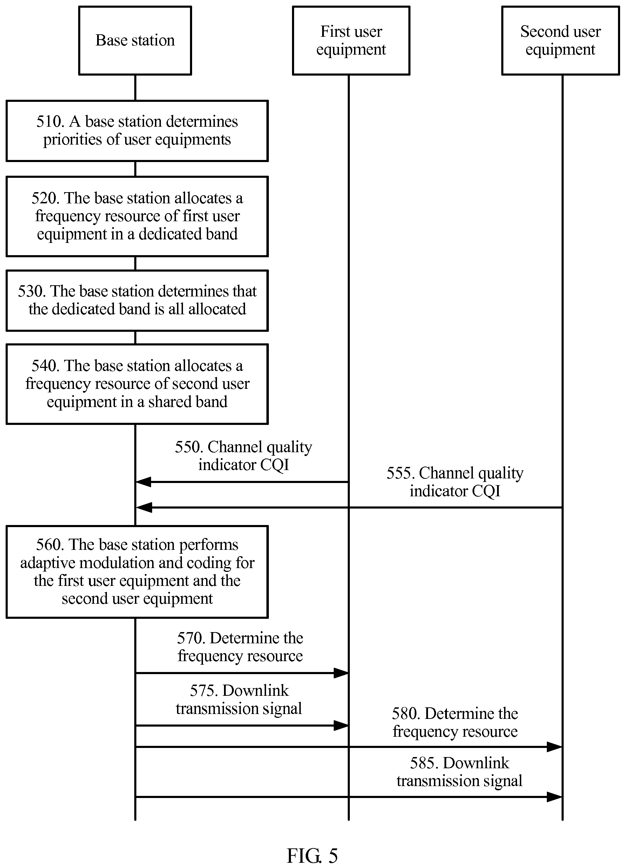

FIG. 5 is a schematic flowchart of a downlink signal transmission method according to an embodiment of the present invention. This embodiment in FIG. 5 is executed by the base station in FIG. 1, and is an example of the method of the embodiment in FIG. 2. In this embodiment, three user equipments and a $K^{th}$ transmission time interval are used as an example for description. Names of user equipment A, user equipment B, and user equipment C are only for distinguishing multiple different user equipments, but are not intended to limit embodiments of the present invention, or understood to be inconsistent with the foregoing embodiments. In addition, this embodiment uses an exemplary solution, and a frequency resource in a dedicated band within the $K^{th}$ transmission time interval and a frequency resource in a shared band within the $K^{th}$ transmission time interval are not allocated to same user equipment at the same time. In addition, the user equipment C and the user equipment B are first user equipments, that is, a frequency resource in the dedicated band is allocated to the user equipment C and the user equipment B. The user equipment A is second user equipment, that is, a frequency resource in the shared band is allocated to the user equipment A. A specific implementation manner is as follows:

510. The base station determines priorities of the user equipments.

Specifically, the base station determines priorities of the user equipment A, the user equipment B, and the user equipment C.

For example, the base station may determine the priorities of the user equipments by using a proportional fair (Proportional Fair, PF) scheduling algorithm, for example, the following formula 5.0:

$$P_{n,k} = E_{n,k}/R_{n,k} \qquad\qquad (5.0)$$

where $P_{n,k}$ represents a frequency resource of $n^{th}$ user equipment within $K^{th}$ transmission time interval, $R_{n,k}$ represents a historical transmission rate of the $n^{th}$ user equipment before the $K^{th}$ transmission time interval, and $E_{n,k}$ represents spectral efficiency of the $n^{th}$ user equipment in the dedicated band within the $K^{th}$ transmission time interval.

Alternatively, the following formula 5.1 may be used:

$$p_{n,k} = d_{n,k}/r_{n,k} \qquad\qquad (5.1)$$

where $p_{n,k}$ represents a frequency resource of $n^{th}$ user equipment within $K^{th}$ transmission time interval, $d_{n,k}$ represents a maximum transmission rate that can be achieved by the $n^{th}$ user equipment within the $K^{th}$ transmission time interval, and $r_{n,k}$ represents an average rate before the $K^{th}$ transmission time interval, that is, an average rate within preceding $(K-1)$ transmission time intervals. For the three user equipments in this embodiment, values of n are 1, 2 and 3, and are corresponding to the user equipment A, the user equipment B, and the user equipment C respectively.

For example, the priorities of the user equipments calculated according to formula 5.0 are: $P_{3,k} > P_{2,k} > P_{1,k}$. That is, within the $K^{th}$ transmission time interval, a priority of the user equipment C is higher than a priority of the user equipment B, and the priority of the user equipment B is higher than a priority of the user equipment A.

520. The base station allocates a frequency resource of the first user equipment in a dedicated band.

Specifically, the base station allocates frequency resources of the user equipment C and the user equipment B that are in the dedicated band and are within the $K^{th}$ transmission time interval according to the determined priorities of the user equipments. In other words, the priority of the user equipment C is higher than the priority of the user equipment B, and the priority of the user equipment B is higher than the priority of the user equipment A, and therefore a frequency resource of the user equipment C is preferentially allocated. In addition, the dedicated band is not all allocated, that is, there is still an allocable frequency resource in the dedicated band, and therefore, the base station allocates a resource in the dedicated band to the user equipment C.

Then, the base station determines that the dedicated band is not all allocated. Next, the base station allocates a frequency resource to the user equipment B according to a sequence of priorities. The dedicated band is not all allocated, and therefore, the base station still allocates a resource in the dedicated band to the user equipment B.

According to the foregoing description, that the frequency resources allocated by the base station to the user equipments are frequency resources that are within the $K^{th}$ transmission time interval and allocated to the user equipments, and details are not described herein.

530. The base station determines that the dedicated band is all allocated.

540. The base station allocates a frequency resource of the second user equipment in a shared band.

Specifically, the base station allocates a frequency resource of the user equipment A that is in the shared band and is within the $K^{th}$ transmission time interval. It is assumed that the dedicated band is all allocated within the $K^{th}$ transmission time interval, and therefore, the frequency resource of the user equipment in the shared band may be allocated. Because a frequency resource in the dedicated band within the $K^{th}$ transmission time interval and a frequency resource in the shared band within the $K^{th}$ transmission time interval are not allocated to same user equipment, the base station cannot allocate a frequency resource in the shared band corresponding to the $K^{th}$ transmission time interval to the user equipment C or the user equipment B, and can allocate the frequency resource only to the user equipment A.

It should be understood that when there are more user equipments, the base station determines to allocate a frequency resource in the shared band to which user equipment according to priorities of the user equipments.

550. The base station receives a CQI sent by the first user equipment.

555. The base station receives a CQI sent by the second user equipment.

Specifically, the base station receives CQIs sent by the user equipment A, the user equipment B, and the user equipment C, and then performs corresponding modulation and coding. $CQI_{n,k}$ represents a CQI of the $n^{th}$ user equipment within the $K^{th}$ transmission time interval.

560. The base station performs adaptive modulation and coding for the first user equipment and the second user equipment.

For example, for the dedicated band or the shared band within the $K^{th}$ transmission time interval, the base station performs corresponding adaptive modulation and coding for different user equipments, so as to determine an MCS.

Specifically, for the user equipment C and the user equipment B, a value of a modulation and coding scheme (MCS) in the dedicated band within the $K^{th}$ transmission time interval is calculated. For example, the following formula 5.2 may be used for calculation:

$$MCS_{n,k}^{dedicate\_band} = CQI_{n,k} + \Delta CQI_{n,k}^{dedicate\_band} \qquad (5.2)$$

where $MCS_{n,k}^{dedicate\_band}$ represents a value of the modulation and coding scheme of the $n^{th}$ user equipment in the dedicated band within the $K^{th}$ transmission time interval, and the modulation and coding scheme includes two parts: $CQI_{n,k}$ directly reported by the user equipment and a CQI adjustment value for the dedicated band. In the formula, n is an identifier of the user equipment, k indicates that the modulation and coding scheme is for the $K^{th}$ transmission time interval. The CQI adjustment value may be specifically calculated by using the following formula 5.3:

$$\Delta CQI_{n,k}^{dedicate\_band} = STEP \times (IBLER_1 - IBLER_{2dedicate\_band})/(1 - IBLER_1) \quad (5.3)$$

where $IBLER_1$ is a target value of an IBLER, $IBLER_2^{dedicate-band}$ is a measurement value obtained by measuring the IBLER that is in the dedicated band and is within the $K^{th}$ transmission time interval by the $n^{th}$ user equipment, and STEP is an adjustment step.

In addition, the base station further calculates a modulation and coding scheme for the user equipment A according to a CQI sent by the user equipment A. Similar to that in the dedicated band, the corresponding modulation and coding scheme may be calculated by using the following formula 5.4:

$$MCS_{n,k}^{shared\_band} = CQI_{n,k} + \Delta CQI_{n,k}^{shared\_band} \qquad (5.4)$$

where $MCS_{n,k}^{shared\_band}$ represents a modulation and coding scheme of the $n^{th}$ user equipment in the shared band within the $K^{th}$ transmission time interval, and the modulation and coding scheme includes two parts: $CQI_{n,k}$ directly reported by the user equipment and a CQI adjustment value for the shared band. In the formula, n is an identifier of the user equipment, k indicates that the modulation and coding scheme is for the $K^{th}$ transmission time interval. The CQI adjustment value may be specifically calculated by using the following formula 5.5:

$$\Delta CQI_{n,k}^{shared\_band} = Step \times ((IBLER_1 - IBLER_2^{shared\_band})/(1 - IBLER_1)) \quad (5.5)$$

where $IBLER_1$ is a target value of an IBLER, $IBLER_2^{shared\_band}$ is a measurement value obtained by measuring the IBLER that is in the shared band and is within the $K^{th}$ transmission time interval by the $n^{th}$ user equipment, and STEP is an adjustment step.

570. The first user equipment determines the frequency resource allocated to the first user equipment by the base station.

575. The base station sends a downlink transmission signal to the first user equipment by using the frequency resource allocated to the first user equipment, and the first user equipment receives the downlink transmission signal by using the frequency resource.

580. The second user equipment determines the frequency resource allocated to the second user equipment by the base station.

585. The base station sends a downlink transmission signal to the second user equipment by using the frequency resource allocated to the second user equipment, and the second user equipment receives the downlink transmission signal by using the frequency resource.

The frequency resources of the user equipments within the $K^{th}$ transmission time interval, and the corresponding modulation and coding schemes are determined, and therefore, the base station may send the downlink transmission signals to the user equipments by using the allocated frequency resources, where the transmission signals are processed by using the corresponding modulation and coding schemes.

The user equipments separately receive the downlink transmission signals by using a frequency resource allocated to each user equipment.

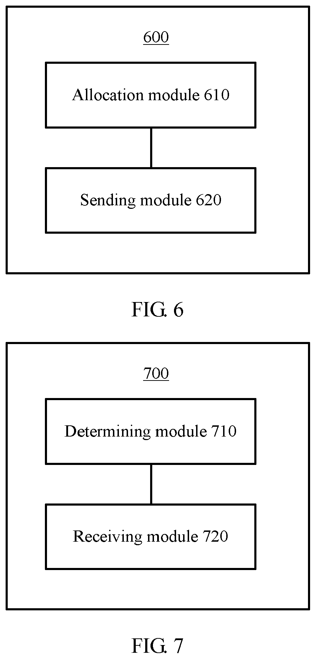

The foregoing describes the downlink signal transmission method according to the embodiments of the present invention. The following describes a base station and user equipment according to embodiments of the present invention with reference to FIG. 6 to FIG. 11.

FIG. 6 is a schematic structural diagram of a downlink signal transmission base station according to an embodiment of the present invention. A base station 600 in FIG. 6 includes: an allocation module 610, configured to: when a dedicated band of a Long Term Evolution system in a transmission band is not all allocated, preferentially allocate a frequency resource in the dedicated band to first user equipment, where the transmission band further includes a shared band between the Long Term Evolution system and a Global System for Mobile Communications; and a sending module 620, configured to send a first downlink signal to the first user equipment by using the frequency resource in the dedicated band.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

According to this embodiment of the present invention, the allocation module is specifically configured to preferentially allocate a frequency resource that is in the dedicated band and is within a predetermined transmission time interval to the first user equipment.

According to this embodiment of the present invention, the allocation module is further configured to: when the frequency resource in the dedicated band within the predetermined transmission time interval is all allocated, allocate a frequency resource that is in the shared band and is within the predetermined transmission time interval to second user equipment; and the sending module is further configured to send a second downlink signal to the second user equipment by using the frequency resource that is in the shared band and is within the predetermined transmission time interval.

Optionally, in another embodiment, the base station in FIG. 6 further includes: a first determining module, configured to determine a priority of the first user equipment, where the priority of the first user equipment indicates a sequence in which the base station allocates a frequency resource to the first user equipment; and the allocation module is further specifically configured to allocate the frequency resource in the dedicated band to the first user equipment according to the priority of the first user equipment.

According to this embodiment of the present invention, the first determining module is specifically configured to determine the priority of the first user equipment according to a transmission rate and band efficiency that are of the first user equipment in the dedicated band.

According to this embodiment of the present invention, that the first determining module is specifically configured to determine the priority of the first user equipment according to a transmission rate and band efficiency that are of the first user equipment in the dedicated band includes: determining, by the first determining module, the priority of the first user equipment according to a transmission rate and band efficiency that are of the first user equipment, in the dedicated band, and within the predetermined transmission time interval.

Optionally, in another embodiment, the base station in FIG. 6 further includes: a receiving module, configured to receive a first channel quality indicator sent by the first user equipment; and a second determining module, configured to determine, by adjusting the first channel quality indicator, a first modulation and coding scheme MCS that is for the first user equipment, of the first downlink signal, and in the dedicated band. The sending module is specifically configured to send, by the base station, the first downlink signal to the first user equipment according to the first modulation and coding scheme by using the frequency resource in the dedicated band.

According to this embodiment of the present invention, the receiving module is further configured to receive a second channel quality indicator sent by the second user equipment; the second determining module is further configured to determine, by adjusting the second channel quality indicator, a second modulation and coding scheme that is for the second user equipment, of the second downlink signal, and in the shared band; and the sending module is further specifically configured to send, by the base station, the second downlink signal to the second user equipment according to the second modulation and coding scheme by using the frequency resource that is within the predetermined transmission time interval.

According to this embodiment of the present invention, the receiving module is further specifically configured to receive the first channel quality indicator periodically sent by the first user equipment, and the second determining module is further specifically configured to: determine an adjustment value of the first channel quality indicator according to a measurement value of an initial transmission block error rate of the first user equipment in the dedicated band and a specified target value of the initial transmission block error rate; and determine, according to the adjustment value of the first channel quality indicator, the first modulation and coding scheme that is for the first user equipment and is in the dedicated band.

For an operation and a function of each module of the base station 600, refer to the foregoing method in FIG. 2. To avoid repetition, details are not described herein.

FIG. 7 is a schematic structural diagram of downlink signal transmission user equipment according to an embodiment of the present invention. User equipment 700 in FIG. 7 includes: a determining module 710, configured to determine a frequency resource in a dedicated band of a Long Term Evolution system in a transmission band, where the frequency resource is allocated by a base station to the user equipment; and a receiving module 720, configured to receive a first downlink signal sent by the base station by using the frequency resource in the dedicated band, where the frequency resource in the dedicated band is preferentially allocated by the base station when the dedicated band is not all allocated, and the transmission band further includes a shared band between the Long Term Evolution system and a Global System for Mobile Communications.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

According to this embodiment of the present invention, the frequency resource in the dedicated band is a frequency resource within a predetermined transmission time interval.

According to this embodiment of the present invention, the frequency resource in the dedicated band is preferentially allocated by the base station according to a priority of the user equipment in the case in which the dedicated band is not all allocated, the priority of the user equipment is determined by the base station, and the priority of the user equipment indicates a sequence in which the base station allocates a frequency resource to the user equipment.

According to this embodiment of the present invention, the priority of the user equipment is determined by the base station according to a transmission rate of the user equipment in the dedicated band and band efficiency.

According to this embodiment of the present invention, the priority of the user equipment is determined by the base station according to a transmission rate and band efficiency that are of the user equipment, in the dedicated band, and within the predetermined transmission time interval.

Optionally, in another embodiment, the user equipment in FIG. 7 further includes: a sending module, configured to send a first channel quality indicator to the base station. The receiving module is specifically configured to receive the first downlink signal sent by the base station according to a first modulation and coding scheme of the first downlink signal in the dedicated band by using the frequency resource in the dedicated band of the Long Term Evolution system in the transmission band, where the first modulation and coding scheme is determined by the base station by adjusting the first channel quality indicator.

According to this embodiment of the present invention, the sending module is specifically configured to periodically send the first channel quality indicator to the base station, where the first modulation and coding scheme is determined by the base station according to an adjustment value of the first channel quality indicator, and the adjustment value of the first channel quality indicator is determined by the base station according to a measurement value of an initial transmission block error rate in the dedicated band and a specified target value of the initial transmission block error rate.

For an operation and a function of each module of the user equipment 700, refer to the foregoing method in FIG. 3. To avoid repetition, details are not described herein.

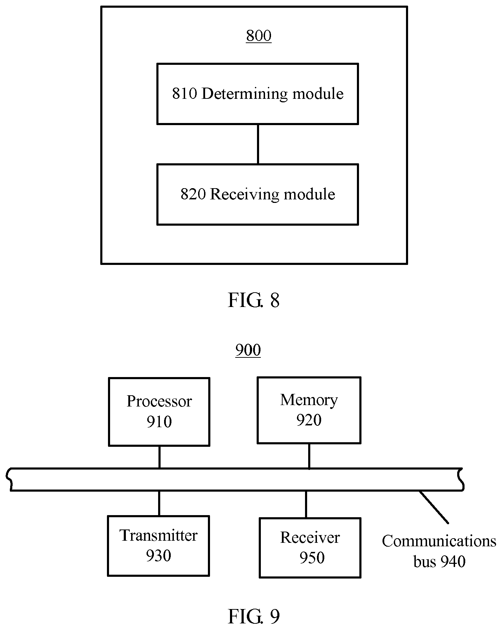

FIG. 8 is a schematic structural diagram of downlink signal transmission user equipment according to an embodiment of the present invention. User equipment 800 in FIG. 8 includes: a determining module 810 and a receiving module 820.

The determining module 810 determines a frequency resource that is in a shared band and is within a predetermined transmission time interval, where the frequency resource is allocated by a base station to the user equipment. The receiving module 820 receives, by using the frequency resource that is in the shared band in a transmission band and is within the predetermined transmission time interval, a second downlink signal sent by the base station, where the transmission band includes the shared band and a dedicated band of a Long Term Evolution system, the shared band is shared by the Long Term Evolution system and a Global System for Mobile Communications, and the frequency resource in the shared band is allocated by the base station to the user equipment when a frequency resource in the dedicated band within the predetermined transmission time interval is all allocated.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

Optionally, in another embodiment, the user equipment in FIG. 8 further includes: a sending module. The sending module sends a second channel quality indicator to the base station. The receiving module is specifically configured to receive the second downlink signal sent to the user equipment according to a second modulation and coding scheme of the second downlink signal by using the frequency resource that is in the shared band and is within the predetermined time interval, and the second modulation and coding scheme is determined by the base station by adjusting the second channel quality indicator.

For an operation and a function of each module of the user equipment 800, refer to the foregoing method in FIG. 4. To avoid repetition, details are not described herein.

FIG. 9 is a schematic structural diagram of a downlink signal transmission base station according to an embodiment of the present invention. A base station 900 in FIG. 9 includes: a processor 910, a memory 920, a transmitter 930, and a communications bus 940.

The processor 910 invokes code in the memory 920 by using the communications bus 940, so as to preferentially allocate a frequency resource in a dedicated band to first user equipment when the dedicated band of a Long Term Evolution system in a transmission band is not all allocated, where the transmission band further includes a shared band between the Long Term Evolution system and a Global System for Mobile Communications. The transmitter 930 sends a first downlink signal to the first user equipment by using the frequency resource in the dedicated band.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

According to this embodiment of the present invention, the processor 910 is specifically configured to preferentially allocate a frequency resource that is in the dedicated band and is within a predetermined transmission time interval to the first user equipment.

According to this embodiment of the present invention, the processor 910 is further configured to: when the frequency resource in the dedicated band within the predetermined transmission time interval is all allocated, allocate a frequency resource that is in the shared band and is within the predetermined transmission time interval to second user equipment; and the transmitter 930 is further configured to send a second downlink signal to the second user equipment by using the frequency resource that is in the shared band and is within the predetermined transmission time interval.

According to this embodiment of the present invention, the processor 910 is further configured to determine a priority of the first user equipment, where the priority of the first user equipment indicates a sequence in which the base station allocates a frequency resource to the first user equipment; and the processor 910 is further specifically configured to allocate the frequency resource in the dedicated band to the first user equipment according to the priority of the first user equipment.

According to this embodiment of the present invention, the processor 910 is further specifically configured to determine the priority of the first user equipment according to a transmission rate and band efficiency that are of the first user equipment in the dedicated band.

According to this embodiment of the present invention, that the processor 910 is further specifically configured to determine the priority of the first user equipment according to a transmission rate and band efficiency that are of the first user equipment in the dedicated band includes: determining, by the processor, the priority of the first user equipment according to a transmission rate and band efficiency that are of the first user equipment, in the dedicated band, and within the predetermined transmission time interval.

Optionally, in another embodiment, the base station in FIG. 9 further includes: a receiver 950, configured to receive a first channel quality indicator sent by the first user equipment; the processor is further configured to determine, by adjusting the first channel quality indicator, a first modulation and coding scheme that is for the first user equipment, of the first downlink signal, and in the dedicated band; and the transmitter 930 is specifically configured to send, by the base station, the first downlink signal to the first user equipment according to the first modulation and coding scheme by using the frequency resource in the dedicated band.

According to this embodiment of the present invention, the receiver 950 is further configured to receive a second channel quality indicator sent by the second user equipment; the processor 910 is further configured to determine, by adjusting the second channel quality indicator, a second modulation and coding scheme that is for the second user equipment, of the second downlink signal, and in the shared band; and the transmitter 930 is further specifically configured to send, by the base station, the second downlink signal to the second user equipment according to the second modulation and coding scheme by using the frequency resource that is within the predetermined transmission time interval.

According to this embodiment of the present invention, the receiver 950 is further specifically configured to receive the first channel quality indicator periodically sent by the first user equipment; and the processor 910 is further specifically configured to: determine an adjustment value of the first channel quality indicator according to a measurement value of an initial transmission block error rate of the first user equipment in the dedicated band and a specified target value of the initial transmission block error rate; and determine, according to the adjustment value of the first channel quality indicator, the first modulation and coding scheme that is for the first user equipment and is in the dedicated band.

For an operation and a function of each module of the base station 900, refer to the foregoing method in FIG. 2. To avoid repetition, details are not described herein.

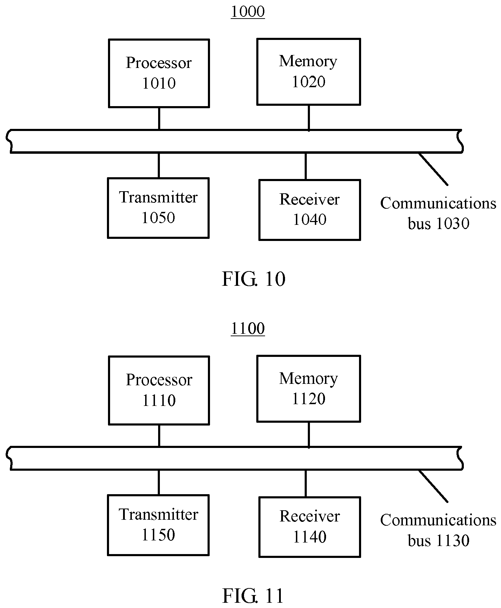

FIG. 10 is a schematic structural diagram of downlink signal transmission user equipment according to an embodiment of the present invention. User equipment 1000 in FIG. 10 includes: a processor 1010, a memory 1020, a receiver 1040, and a communications bus 1030. The processor 1010 invokes code in the memory 1020 by using the communications bus 1030, so as to determine a frequency resource in a dedicated band of a Long Term Evolution system in a transmission band, where the frequency resource is allocated by a base station to the user equipment. The receiver 1040 is configured to receive a first downlink signal sent by the base station by using the frequency resource in the dedicated band, where the frequency resource in the dedicated band is preferentially allocated by the base station when the dedicated band is not all allocated, and the transmission band further includes a shared band between the Long Term Evolution system and a Global System for Mobile Communications.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

According to this embodiment of the present invention, the frequency resource in the dedicated band is a frequency resource within a predetermined transmission time interval.

According to this embodiment of the present invention, the frequency resource in the dedicated band is preferentially allocated by the base station according to a priority of the user equipment in the case in which the dedicated band is not all allocated, the priority of the user equipment is determined by the base station, and the priority of the user equipment indicates a sequence in which the base station allocates a frequency resource to the user equipment.

According to this embodiment of the present invention, the priority of the user equipment is determined by the base station according to a transmission rate of the user equipment in the dedicated band and band efficiency.

According to this embodiment of the present invention, the priority of the user equipment is determined by the base station according to a transmission rate and band efficiency that are of the user equipment, in the dedicated band, and within the predetermined transmission time interval.

Optionally, in another embodiment, the user equipment in FIG. 10 further includes: a transmitter 1050, configured to send a first channel quality indicator to the base station; and the receiver is specifically configured to receive the first downlink signal sent by the base station according to a first modulation and coding scheme of the first downlink signal in the dedicated band by using the frequency resource in the dedicated band of the Long Term Evolution system in the transmission band, where the first modulation and coding scheme is determined by the base station by adjusting the first channel quality indicator.

According to this embodiment of the present invention, the transmitter 1050 is specifically configured to periodically send the first channel quality indicator to the base station, the first modulation and coding scheme is determined by the base station according to an adjustment value of the first channel quality indicator, and the adjustment value of the first channel quality indicator is determined by the base station according to a measurement value of an initial transmission block error rate in the dedicated band and a specified target value of the initial transmission block error rate.

For an operation and a function of each module of the user equipment 1000, refer to the foregoing method in FIG. 3. To avoid repetition, details are not described herein.

FIG. 11 is a schematic structural diagram of downlink signal transmission user equipment according to an embodiment of the present invention. User equipment in FIG. 11 includes: a processor 1110, a memory 1120, a receiver 1140, and a communications bus 1130. The processor 1110 invokes code in the memory 1120 by using the communications bus 1130. The processor 1110 is configured to determine a frequency resource that is in a shared band and is within a predetermined transmission time interval, where the frequency resource is allocated by a base station to the user equipment. The receiver 1140 is configured to receive, by using the frequency resource that is in the shared band in a transmission band and is within the predetermined transmission time interval, a second downlink signal sent by the base station, where the transmission band includes the shared band and a dedicated band of a Long Term Evolution system, the shared band is shared by the Long Term Evolution system and a Global System for Mobile Communications, and the frequency resource in the shared band is allocated by the base station to the user equipment when a frequency resource in the dedicated band within the predetermined transmission time interval is all allocated.

According to this embodiment of the present invention, in a transmission band including a shared band and a dedicated band, a frequency resource in the dedicated band of LTE with higher channel quality is preferentially allocated, and therefore, a downlink signal transmission rate in the transmission band is improved.

Optionally, in another embodiment, the user equipment in FIG. 11 further includes: a transmitter 1150, configured to send a second channel quality indicator to the base station; and the processor is specifically configured to receive the second downlink signal sent to the user equipment according to a second modulation and coding scheme of the second downlink signal by using the frequency resource that is in the shared band and is within the predetermined time interval, where the second modulation and coding scheme is determined by the base station by adjusting the second channel quality indicator.

For an operation and a function of each module of the user equipment 1100, refer to the foregoing method in FIG. 4. To avoid repetition, details are not described herein.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A downlink signal transmission method, comprising:

   when a dedicated band of a Long Term Evolution, LTE, system in a transmission band is not all allocated, allocating, by a base station (110), a frequency resource in the dedicated band to a first user equipment (120), UE, wherein the transmission band further comprises a shared band between the LTE system and a Global System for Mobile Communications, GSM; and sending, by the base station (110), a first downlink signal to the first UE (120) by using the frequency resource in the dedicated band; and

   when the frequency resource in the dedicated band is all allocated, allocating, by the base station (110), a frequency resource that is in the shared band to a second UE (130); and sending, by the base station (110), a second downlink signal to the second UE (130) by using the frequency resource that is in the shared band.

2. The method according to claim 1, wherein, in the step of allocating a frequency resource to the first UE (120), a frequency resource that is in the dedicated band and is within a predetermined transmission time interval is allocated to the first UE (120), and, in the step of allocating a frequency resource to the second UE (130), a frequency resource that is in the shared band and is within the predetermined transmission time interval is allocated to second UE (130).

3. The method according to any one of claims 1 to 2, further comprising:

   determining, by the base station (110), a priority of the first UE (120), wherein the priority of the first UE (120) indicates a sequence in which the base station (110) allocates a frequency resource to the first UE (120); wherein the allocating, by a base station (110), a frequency resource in the dedicated band to first UE (120) comprises:

   allocating, by the base station (110), the frequency resource in the dedicated band to the first UE (120) according to the priority of the first UE (120).

4. The method according to claim 3, wherein the determining, by the base station (110), a priority of the first UE (120) comprises: determining, by the base station (110), the priority of the first UE (120) according to a transmission rate and band efficiency of the first UE (120) in the dedicated band.

5. The method according to any one of claims 1 to 4, further comprising:

   receiving, by the base station (110), a first channel quality indicator, CQI, sent by the first UE (120); and determining, by the base station (110), according to the first CQI, a first modulation and coding scheme, MCS, that is for the first UE (120), of the first downlink signal, and in the dedicated band, wherein the sending, by the base station (110), a first downlink signal to the first UE (120) by using the frequency resource in the dedicated band comprises:

   sending, by the base station (110), the first downlink signal to the first UE (120) according to the first MCS by using the frequency resource in the dedicated band.

6. The method according to claim 5, further comprising:

   receiving, by the base station (110), a second CQI sent by the second UE (130); and determining, by the base station (110), according to the second CQI, a second MCS that is for the second UE (130), of the second downlink signal, and in the shared band, wherein the sending, by the base station (110), a second downlink signal to the second UE (130) by using the frequency resource that is in the shared band comprises:

   sending, by the base station (110), the second downlink signal to the second UE (130) according to the second MCS by using the frequency resource in the shared band.

7. A base station (600), comprising:

   an allocation module (600), configured to: when a dedicated band of a Long Term Evolution, LTE, system in a transmission band is not all allocated, allocate a frequency resource in the dedicated band to a first user equipment (120), UE, wherein the transmission band further comprises a shared band between the LTE system and a Global System for Mobile Communications, GSM; and

   a sending module (620), configured to send a first downlink signal to the first UE (120) by using the frequency resource in the dedicated band;
wherein the allocation module (610) is further configured to: when the frequency resource in the dedicated band is all allocated, allocate a frequency resource that is in the shared band to a second UE (130); and
the sending module (620) is further configured to send a second downlink signal to the second UE (130) by using the frequency resource that is in the shared band.

8. The base station (600) according to claim 7, wherein
the allocation module (610) is specifically configured allocate a frequency resource that is in the dedicated band and is within a predetermined transmission time interval to the first UE (120), and to allocate a frequency resource that is in the shared band and is within the predetermined transmission time interval to second UE (130).

9. The base station (600) according to any one of claims 7 to 8, further comprising:

a first determining module, configured to determine a priority of the first UE (120), wherein the priority of the first UE (120) indicates a sequence in which the base station (600) allocates a frequency resource to the first UE (120), wherein
the allocation module (610) is specifically configured to allocate the frequency resource in the dedicated band to the first UE (120) according to the priority of the first UE (120).

10. The base station (600) according to claim 9, wherein the first determining module is specifically configured to determine the priority of the first UE (120) according to a transmission rate and band efficiency of the first UE (120) in the dedicated band.

11. The base station (600) according to any one of claims 7 to 10, further comprising:

a receiving module, configured to receive a first channel quality indicator, CQI, sent by the first UE (120); and
a second determining module, configured to determine, according to the first CQI, a first modulation and coding scheme, MCS, that is for the first UE (120), of the first downlink signal, and in the dedicated band, wherein
the sending module (620) is specifically configured to send, the first downlink signal to the first UE (120) according to the first MCS by using the frequency resource in the dedicated band.

12. The base station (600) according to claim 11, wherein the receiving module is further configured to receive a second CQI sent by the second UE (130);
the second determining module is further configured to determine, according to the second CQI, a second MCS that is for the second UE (130), of the second downlink signal, and in the shared band; and
the sending module (620) is further configured to send, the second downlink signal to the second UE (130) according to the second MCS by using the frequency resource in the shared band.


**Patentansprüche**

1. Downlink-Signalübertragungsverfahren, umfassend:

wenn ein dediziertes Band eines Long Term Evolution (LTE)-Systems in einem Übertragungsband nicht vollständig zugewiesen ist, Zuweisen, durch eine Basisstation (110), einer Frequenzressource in dem dedizierten Band an ein erstes Benutzergerät (User Equipment, UE) (120), wobei das Übertragungsband ferner ein zwischen dem LTE-System und einem globalen System für mobile Kommunikation (Global System for Mobile Communications, GSM) gemeinsam genutztes Band umfasst; und Senden, durch die Basisstation (110), eines ersten Downlink-Signals an das erste UE (120) unter Verwendung der Frequenzressource in dem dedizierten Band; und
wenn die Frequenzressource in dem dedizierten Band vollständig zugewiesen ist, Zuweisen, durch die Basisstation (110), einer Frequenzressource, die sich in dem gemeinsam genutzten Band befindet, an ein zweites UE (130); und
Senden, durch die Basisstation (110), eines zweiten Downlink-Signals an das zweite UE (130) unter Verwendung der Frequenzressource, die sich in dem gemeinsam genutzten Band befindet.

2. Verfahren nach Anspruch 1, wobei bei dem Schritt des Zuweisens einer Frequenzressource an das ersten UE (120) eine Frequenzressource, die sich in dem dedizierten Band befindet und innerhalb eines vorbestimmten Übertragungszeitintervalls liegt, dem ersten UE (120) zugewiesen wird, und bei dem Schritt des Zuweisens einer Frequenzressource an das zweite UE (130) eine Frequenzressource, die sich in dem gemeinsam genutzten Band befindet und innerhalb des vorbestimmten Übertragungszeitintervalls liegt, dem zweiten UE (130) zugewiesen wird.

3. Verfahren nach einem der Ansprüche 1 bis 2, ferner umfassend:

Bestimmen, durch die Basisstation (110), einer Priorität des ersten UE (120), wobei die Priorität der ersten UE (120) eine Reihenfolge angibt, in der die Basisstation (110) dem ersten UE (120) eine Frequenzressource zuweist;
wobei das Zuweisen, durch eine Basisstation (110), einer Frequenzressource in dem dedizierten Band an das erste UE (120) umfasst:
Zuweisen, durch die Basisstation (110), der Frequenzressource in dem dedizierten Band an das erste UE (120) gemäß der Priorität des ersten UE (120).

4. Verfahren nach Anspruch 3, wobei das Bestimmen, durch die Basisstation (110), einer Priorität des ersten UE (120) umfasst: Bestimmen, durch die Basisstation (110), der Priorität des ersten UE (120) gemäß der Übertragungsrate und der Bandeffizienz des ersten UE (120) in dem dedizierten Band.

5. Verfahren nach einem der Ansprüche 1 bis 4, ferner umfassend:

Empfangen, durch die Basisstation (110), eines ersten Kanalqualitätsindikators (Channel Quality Indicator, CQI), der von dem ersten UE (120) gesendet wird; und
Bestimmen, durch die Basisstation (110) gemäß dem ersten CQI, eines ersten Modulations- und Kodierungsschemas (Modulation and Coding Scheme, MCS), das für das erste UE (120) bestimmt ist, des ersten Downlink-Signals und in dem dedizierten Band, wobei
das Senden, durch die Basisstation (110), eines ersten Downlink-Signals an das erste UE (120) unter Verwendung der Frequenzressource in dem dedizierten Band, umfasst: Senden, durch die Basisstation (110), des ersten Downlink-Signals an das erste UE (120) gemäß dem ersten MCS unter Verwendung der Frequenzressource in dem dedizierten Band.

6. Verfahren nach Anspruch 5, ferner umfassend:

Empfangen, durch die Basisstation (110), eines zweiten CQI, der von dem zweiten UE (130) gesendet wird; und
Bestimmen, durch die Basisstation (110) gemäß dem zweiten CQI, eines zweiten MCS, das für das zweite UE (130) bestimmt ist, des zweiten Downlink-Signals und in dem gemeinsam genutzten Band, wobei
das Senden, durch die Basisstation (110), eines zweiten Downlink-Signals an das zweite UE (130) unter Verwendung der Frequenzressource, die sich in dem gemeinsam genutzten Band befindet, umfasst:
Senden, durch die Basisstation (110), des zweiten Downlink-Signals an das zweite UE (130) gemäß dem zweiten MCS unter Verwendung der Frequenzressource in dem gemeinsam genutzten Band.

7. Basisstation (600), umfassend:

ein Zuweisungsmodul (600), das konfiguriert ist, um: wenn ein dediziertes Band eines Long Term Evolution (LTE)-Systems in einem Übertragungsband nicht vollständig zugewiesen ist, eine Frequenzressource in dem dedizierten Band an ein erstes Benutzergerät (UE) (120) zuzuweisen, wobei das Übertragungsband ferner ein zwischen dem LTE-System und einem globalen System für mobile Kommunikation (GSM) gemeinsam genutztes Band umfasst; und
ein Sendemodul (620), das konfiguriert ist, um ein erstes Downlink-Signal an das erste UE (120) unter Verwendung der Frequenzressource in dem dedizierten Band zu senden;
wobei das Zuweisungsmodul (610) ferner konfiguriert ist, um:

wenn die Frequenzressource in dem dedizierten Band vollständig zugewiesen ist, eine Frequenzressource, die sich in dem gemeinsam genutzten Band befindet, einem zweiten UE (130) zuzuweisen; und
das Sendemodul (620) ferner konfiguriert ist, um ein zweites Downlink-Signal an das zweite UE (130) unter Verwendung der Frequenzressource, die sich in dem gemeinsam genutzten Band befindet, zu senden.

8. Basisstation (600) nach Anspruch 7, wobei
das Zuweisungsmodul (610) insbesondere konfiguriert ist, um eine Frequenzressource zuzuweisen, die sich in dem dedizierten Band befindet und innerhalb eines vorbestimmten Übertragungszeitintervalls zu dem ersten UE (120) liegt, und um eine Frequenzressource zuzuweisen, die sich in dem dedizierten Band befindet und innerhalb eines vorbestimmten Übertragungszeitintervalls zu dem zweiten UE (130) liegt.

9. Basisstation (600) nach einem der Ansprüche 7 bis 8, ferner umfassend:

   ein erstes Bestimmungsmodul, das konfiguriert ist, um eine Priorität des ersten UE (120) zu bestimmen, wobei die Priorität des ersten UE (120) eine Reihenfolge angibt, in der die Basisstation (600) dem ersten UE (120) eine Frequenzressource zuweist, wobei
   das Zuweisungsmodul (610) insbesondere konfiguriert ist, um dem ersten UE (120) die Frequenzressource in dem dedizierten Band gemäß der Priorität der ersten UE (120) zuzuweisen.

10. Basisstation (600) nach Anspruch 9, wobei das erste Bestimmungsmodul insbesondere konfiguriert ist, um die Priorität des ersten UE (120) gemäß einer Übertragungsrate und einer Bandeffizienz des ersten UE (120) in dem dedizierten Band zu bestimmen.

11. Basisstation (600) nach einem der Ansprüche 7 bis 10, ferner umfassend:

    ein Empfangsmodul, das konfiguriert ist, um einen ersten Kanalqualitätsindikator (CQI) zu empfangen, der von dem ersten UE (120) gesendet wird; und
    ein zweites Bestimmungsmodul, das konfiguriert ist, um gemäß dem ersten CQI ein erstes Modulations- und Kodierungsschema (MCS), das für das erste UE (120) bestimmt ist, des ersten Downlink-Signals und in dem dedizierten Band zu bestimmen, wobei
    das Sendemodul (620) insbesondere konfiguriert ist, um das erste Downlink-Signal an das erste UE (120) gemäß dem ersten MCS unter Verwendung der Frequenzressource in dem dedizierten Band zu senden.

12. Basisstation (600) nach Anspruch 11, wobei das Empfangsmodul ferner konfiguriert ist, um einen zweiten CQI zu empfangen, der von dem zweiten UE (130) gesendet wird;
    das zweite Bestimmungsmodul ferner konfiguriert ist, um gemäß dem zweiten CQI ein zweites MCS, das für das zweite UE (130) bestimmt ist, des zweiten Abwärtsstreckensignals und in dem gemeinsam genutzten Band zu bestimmen; und
    das Sendemodul (620) ferner dazu konfiguriert ist, das zweite Downlink-Signal an das zweite UE (130) gemäß dem zweiten MCS unter Verwendung der Frequenzressource in dem gemeinsam genutzten Band zu senden.

## Revendications

1. Procédé de transmission d'un signal de liaison descendante, comprenant :

   lorsqu'une bande dédiée d'un système d'évolution à long terme, LTE, dans une bande de transmission n'est pas entièrement attribuée, l'attribution, par une station de base (110), d'une ressource fréquentielle dans la bande dédiée à un premier équipement utilisateur (120), UE, la bande de transmission comprenant en outre une bande partagée entre le système LTE et un système global pour communications mobiles, GSM ; et
   l'envoi, par la station de base (110), d'un premier signal de liaison descendante au premier UE (120) en utilisant la ressource fréquentielle dans la bande dédiée ; et
   lorsque la ressource fréquentielle dans la bande dédiée est entièrement attribuée, l'attribution, par la station de base (110), d'une ressource fréquentielle qui est dans la bande partagée à un second UE (130) ; et
   l'envoi, par la station de base (110), d'un second signal de liaison descendante au second UE (130) en utilisant la ressource fréquentielle qui est dans la bande partagée.

2. Procédé selon la revendication 1, dans l'étape d'attribution d'une ressource fréquentielle au premier UE (120), une ressource fréquentielle qui est dans la bande dédiée et à l'intérieur d'un intervalle de temps de transmission prédéterminé étant attribuée au premier UE (120), et dans l'étape d'attribution d'une ressource fréquentielle au second UE (130), une ressource fréquentielle qui est dans la bande partagée et qui est dans l'intervalle de temps de transmission prédéterminé étant attribuée au second UE (130).

3. Procédé selon l'une quelconque des revendications 1 à 2, comprenant en outre :

   la détermination, par la station de base (110), d'une priorité du premier UE (120), la priorité du premier UE (120) indiquant une séquence dans laquelle la station de base (110) attribue une ressource fréquentielle au premier UE (120) ;

l'attribution, par une station de base (110), d'une ressource fréquentielle dans la bande dédiée au premier UE (120) comprenant :

l'attribution, par la station de base (110), de la ressource fréquentielle dans la bande dédiée au premier UE (120) en fonction de la priorité du premier UE (120).

4. Procédé selon la revendication 3, la détermination, par la station de base (110), d'une priorité du premier UE (120) comprenant : la détermination, par la station de base (110), de la priorité du premier UE (120) en fonction d'un débit de transmission et de l'efficacité de la bande du premier UE (120) dans la bande dédiée.

5. Procédé selon l'une quelconque des revendications 1 à 4, comprenant en outre :

la réception, par la station de base (110), d'un premier indicateur de qualité de canal, CQI, envoyé par le premier UE (120) ; et

la détermination, par la station de base (110), en fonction du premier CQI, d'un premier schéma de modulation et de codage, MCS, qui est pour le premier UE (120), du premier signal de liaison descendante, et dans la bande dédiée,

l'envoi, par la station de base (110), d'un premier signal de liaison descendante au premier UE (120) en utilisant la ressource fréquentielle dans la bande dédiée comprenant :

l'envoi, par la station de base (110), du premier signal de liaison descendante au premier UE (120) en fonction du premier MCS en utilisant la ressource fréquentielle dans la bande dédiée.

6. Procédé selon la revendication 5, comprenant en outre :

la réception, par la station de base (110), d'un second CQI envoyé par le second UE (130) ; et

la détermination, par la station de base (110), en fonction du second CQI, d'un second MCS qui est pour le second UE (130), du second signal de liaison descendante, et dans la bande partagée,

l'envoi, par la station de base (110), d'un second signal de liaison descendante au second UE (130) en utilisant la ressource fréquentielle qui est dans la bande partagée comprenant :

l'envoi, par la station de base (110), du second signal de liaison descendante au second UE (130) en fonction du second MCS en utilisant la ressource fréquentielle dans la bande partagée.

7. Station de base (600), comprenant :

un module d'attribution (600), configuré pour : lorsqu'une bande dédiée d'un système d'évolution à long terme, LTE, dans une bande de transmission n'est pas entièrement attribuée, attribuer une ressource fréquentielle dans la bande dédiée à un premier équipement utilisateur (120), UE, la bande de transmission comprenant en outre une bande partagée entre le système LTE et un système global pour communications mobiles, GSM ; et

un module d'envoi (620), configuré pour envoyer un premier signal de liaison descendante au premier UE (120) en utilisant la ressource fréquentielle dans la bande dédiée ;

le module d'attribution (610) étant en outre configuré pour: lorsque la ressource fréquentielle dans la bande dédiée est entièrement attribuée, attribuer une ressource fréquentielle qui est dans la bande partagée à un second UE (130) ; et

le module d'envoi (620) étant en outre configuré pour envoyer un second signal de liaison descendante au second UE (130) en utilisant la ressource fréquentielle qui est dans la bande partagée.

8. Station de base (600) selon la revendication 7, le module d'attribution (610) étant configuré spécifiquement pour attribuer une ressource fréquentielle qui est dans la bande dédiée et à l'intérieur d'un intervalle de temps de transmission prédéterminé au premier UE (120), et pour attribuer une ressource fréquentielle qui est dans la bande partagée et à l'intérieur de l'intervalle de temps de transmission prédéterminé au second UE (130).

9. Station de base (600) selon l'une quelconque des revendications 7 à 8, comprenant en outre :

un premier module de détermination, configuré pour déterminer une priorité du premier UE (120), la priorité du premier UE (120) indiquant une séquence dans laquelle la station de base (600) attribue une ressource fréquentielle au premier UE (120),

le module d'attribution (610) étant configuré spécifiquement pour attribuer la ressource fréquentielle dans la bande dédiée au premier UE (120) en fonction de la priorité du premier UE (120).

10. Station de base (600) selon la revendication 9, le premier module de détermination étant configuré spécifiquement pour déterminer la priorité du premier UE (120) en fonction d'un débit de transmission et d'une efficacité de bande du premier UE (120) dans la bande dédiée.

11. Station de base (600) selon l'une quelconque des revendications 7 à 10, comprenant en outre :

un module de réception, configuré pour recevoir un premier indicateur de qualité de canal, CQI, envoyé par le premier UE (120) ; et
un second module de détermination, configuré pour déterminer, en fonction du premier CQI, un premier schéma de modulation et de codage, MCS, qui est pour le premier UE (120), du premier signal de liaison descendante, et dans la bande dédiée, le module d'envoi (620) étant configuré spécifiquement pour envoyer le premier signal de liaison descendante au premier UE (120) en fonction du premier MCS en utilisant la ressource fréquentielle dans la bande dédiée.

12. Station de base (600) selon la revendication 11, le module de réception étant en outre configuré pour recevoir un second CQI envoyé par le second UE (130) ;
le second module de détermination étant en outre configuré pour déterminer, en fonction du second CQI, un second MCS qui est pour le second UE (130), du second signal de liaison descendante, et dans la bande partagée ; et
le module d'envoi (620) étant en outre configuré pour envoyer le second signal de liaison descendante au second UE (130) en fonction du second MCS en utilisant la ressource fréquentielle dans la bande partagée.

100

Base station
110

User
equipment
120

User
equipment
130

FIG. 1

When a dedicated band of a Long Term Evolution LTE system in a
transmission band is not all allocated, a base station preferentially
allocates a frequency resource in the dedicated band to first user
equipment, where the transmission band further includes a shared band
between the Long Term Evolution system and a Global System for
Mobile Communications GSM

210

The base station sends a first downlink signal to the first user
equipment by using the frequency resource in the dedicated band

220

FIG. 2

First user equipment determines a frequency resource in a dedicated band of a Long Term Evolution LTE system in a transmission band, where the frequency resource is allocated by a base station to the first user equipment | 310

The first user equipment receives a first downlink signal sent by the base station by using the frequency resource that is in the dedicated band | 320

FIG. 3

Second user equipment determines a frequency resource that is in a shared band and is within a predetermined transmission time interval, where the frequency resource is allocated by a base station to the second user equipment | 410

The second user equipment receives, by using the frequency resource that is in the shared band in a transmission band and is within the predetermined transmission time interval TTI, a second downlink signal sent by the base station | 420

FIG. 4

| Base station | First user equipment | Second user equipment |

510. A base station determines priorities of user equipments

520. The base station allocates a frequency resource of first user equipment in a dedicated band

530. The base station determines that the dedicated band is all allocated

540. The base station allocates a frequency resource of second user equipment in a shared band

550. Channel quality indicator CQI

555. Channel quality indicator CQI

560. The base station performs adaptive modulation and coding for the first user equipment and the second user equipment

570. Determine the frequency resource

575. Downlink transmission signal

580. Determine the frequency resource

585. Downlink transmission signal

FIG. 5

600

Allocation module 610

Sending module 620

FIG. 6

700

Determining module 710

Receiving module 720

FIG. 7

<u>800</u>

| 810 Determining module |
| :---: |

| 820 Receiving module |
| :---: |

FIG. 8

<u>900</u>

| Processor 910 | Memory 920 |
| :---: | :---: |

| Transmitter 930 | Receiver 950 | Communications bus 940 |
| :---: | :---: | :---: |

FIG. 9

1000

```
┌──────────────┐        ┌──────────────┐
│  Processor   │        │    Memory    │
│    1010      │        │    1020      │
└──────┬───────┘        └──────┬───────┘
       │                       │
───────┴───────────────────────┴───────────────
───────┬───────────────────────┬───────────────
       │                       │
┌──────┴───────┐        ┌──────┴───────┐
│ Transmitter  │        │   Receiver   │    Communications
│    1050      │        │    1040      │    bus 1030
└──────────────┘        └──────────────┘
```

FIG. 10

1100

```
┌──────────────┐        ┌──────────────┐
│  Processor   │        │    Memory    │
│    1110      │        │    1120      │
└──────┬───────┘        └──────┬───────┘
       │                       │
───────┴───────────────────────┴───────────────
───────┬───────────────────────┬───────────────
       │                       │
┌──────┴───────┐        ┌──────┴───────┐
│ Transmitter  │        │   Receiver   │    Communications
│    1150      │        │    1140      │    bus 1130
└──────────────┘        └──────────────┘
```

FIG. 11

**EP 3 104 655 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110077015 A1
- US 20130273928 A1
- US 20130308595 A1
- EP 2574097 A1